Europäisches Patentamt

European Patent Office

Office européen des brevets

(19)

(11) Veröffentlichungsnummer: **0 230 883 B1**

# (12) EUROPÄISCHE PATENTSCHRIFT

(45) Veröffentlichungstag der Patentschrift: **11.09.91**

(51) Int. Cl.⁵: **B65G 63/00, B65G 65/28**

(21) Anmeldenummer: **87100200.2**

(22) Anmeldetag: **09.01.87**

(54) **Anordnung mit einer mobilen Becherauftragevorrichtung zur Ein- und Auslagerung von Schüttgütern.**

(30) Priorität: **22.01.86 HU 30386**

(43) Veröffentlichungstag der Anmeldung:
**05.08.87 Patentblatt 87/32**

(45) Bekanntmachung des Hinweises auf die
Patenterteilung:
**11.09.91 Patentblatt 91/37**

(84) Benannte Vertragsstaaten:
**AT BE CH DE ES FR GB GR IT LI LU NL SE**

(56) Entgegenhaltungen:
**AT-B- 202 519**
**US-A- 1 060 476**

(73) Patentinhaber: **Uj Barázda MGTSZ**

**Nyirbátor(HU)**

(72) Erfinder: **Petis, Mihály**

**Nyirbátor(HU)**
Erfinder: **Kainy, Lászl**

**Nyirbátor(HU)**
Erfinder: **Kith, Károly**

**Nyirbátor(HU)**

(74) Vertreter: **Patentanwälte Viering & Jentschura**
**Steinsdorfstrasse 6**
**W-8000 München 22(DE)**

## Beschreibung

Die Erfindung betrifft eine Förderanlage zum Ein- und Auslagern von Schüttgut in bzw. aus Speichergebäuden, mit einem entlang des jeweiligen Speichergebäudes verlaufenden oberen Bandförderer, der von einer vertikalen Becherfördervorrichtung gespeist wird.

Es sind jeweils verschiedene Maschinensysteme zum Transport von landwirtschaftlichen Schüttgütern und von Schüttgrundstoffen der Industrie bekannt, die eine Korrosionswirkung unterschiedlichen Ausmaßes auf die maschinellen Vorrichtungen ausüben.

Es ist ein Schüttgüter in Hallenspeicher einlagerndes technologisches System bekannt. Dieses System weist die folgenden Mittel auf: Eine Waggonausladevorrichtung mit Rolle oder in selbstfahrender Gestaltung für mit der Industriebahn und in Eisenwagen ankommendes Gut oder im Straßenfahrzeug ankommendes Gut, einen mobilen Bandförderer mit Schütte, eine waagerechte feste Förderbahn, eine an festen Stellen in einer Bühne befestigte Becherfördervorrichtung sowie eine in den oberen Teil der Hallenkonstruktion eingebaute Bandförderbahn mit Abwurfssystemen.

Die Schüttgüter werden aus dem Eisenbahnwagen oder dem Straßenfahrzeug mit Hilfe der Waggonausladevorrichtungen mit Rolle bzw. mit Hilfe eines zum Kippen angewendeten mobilen Bandförderers mit Schütte über den festen waagerechten Bandförderder an die an festen Stellen in der Bühne befestigte Becherfördervorrichtung übergeben, die das Gut auf die obere Bandfördererbahn auffördert. Von der oberen Bandfördererbahn wird das Schüttgut von einer Abwurfvorrichtung an der gewünschten Stelle abgeworfen.

Es sind weiterhin Förderanlagen Zum Auslagern von Schüttgut aus Speichergebäuden bekannt. (Diese Systeme dienen zum fortlaufenden Auslagern oder zum intermittierenden Materialabfördern). Es sind drei Varianten des Systems bekannt. Bei der ersten Variante handelt es sich im allgemeinen um ein aus der Gesamtheit einer Aufnahme-Verlademaschine, eines mobilen Bandförderers mit Schütte, eines mobilen schrägen Auftragebandförderers sowie den Straßenfördererfahrzeugen bestehendes System. Im Speicherraum führt die Aufnahme- bzw. Verlademaschine eine fortlaufende Materialaufgabe auf den mobilen Bandförderer durch, dessen Schütte das Material auf den schrägen Auftragebandförderer gibt, der es auf das Förderfahrzeug entleert. Das Förderfahrzeug steht außerhalb der Speicherhalle, so daß eine Verunreinigung des Gutes vermieden werden kann. In Abhängigkeit von der Entfernung von dem Auslagerungspunkt sind noch zusätzliche Bandförderer notwendig.

Bei der anderen Variante kann die Aufgabe des Materials in einem Punkt des Gebäudes unter Verwendung einer im oberen Teil der Hallenkonstruktion aufgebauten oberen Förderbahn mit Hilfe der Einstellung eines zusätzlichen Auftragetaschenbandes mit schrägem, fest gestalteten Aufnahmetrichter verwirklicht werden. Von der Aufnahme- und Verlademaschine wird das Material zum Aufnahmetrichter des schrägen Auftragetaschenbandes und von dem schrägen Auftragetaschenband auf die Förderbahn gefördert; dann wird das Material von der oberen Bahn außerhalb des Gebäudes mit Hilfe einer Schurre zur gewünschten Verwendungsstelle bzw. zur Abfuhr gefördert.

Die dritte Variante besteht auf folgenden Vorrichtungen:
Einer Aufnahme-Verlademaschine, einem Speicher in Hallenkonstruktion im Hochbau und mit großem Volumen (z.B. in den Grundstoffe herstellenden Betrieben), einer in den Fußboden des Speichers in dessen Längsachse aufgebauten Flurförderbahn, einem mit der Flurförderbahn verbundenen reversiblem Materialaufnehmer und einem schrägen Auftragetaschenband sowie einer oberen Förderbahn. In den Speicher kann entlang dessen Längsachse in jedem Punkt der Längsachse das Material auf die obere Bandförderbahn durch die Einschaltung der Aufnahme-Verlademaschine aufgegeben werden; das Material wird von der oberen Bandförderbahn außerhalb des Gebäudes mit Hilfe einer Schurre zur gewünschten Weiterverarbeitung bzw. zur Abfuhr befördert.

Die Nachteile der oben genannten Ein- und Auslagerungssysteme werden nachstehend erläutert.

Einlagerungssysteme: Bedeutende Teile des technischen Mittels eignen sich wegen ihres ortsfesten Einbaus bzw. ihrer Ortsgebundenheit nicht für die Teilnahme im Arbeitsvorgang der Auslagerungstätigkeit; es sind je nach Speichertyp unterschiedliche technische Einlagerungssysteme notwendig.

Auslagerungssysteme: Sie können nur beim Auslagerungsvorgang verwendet werden. Sie arbeiten mit großem Leck- und Verunreinigungsanteil. Sie benötigen einen hohen Materialtransportraum im Innenraum. Bei der Anwendung der Auslagerungssysteme wird die Materialgüte durch Zerstoßen und Zerbrechen vermindert, und sie bringen eine gesundheitsschädliche Staubentwicklung zustande. Die Verbrennungsmotoren ergeben eine Gasentwicklung und der Kostenaufwand für die Mittel ist groß. Die schrägen Auftragetaschenbänder mit hohen Investitionskosten gewährleisten nur die Aufgabe an einer Stelle, weil sie nicht bewegbar sind, und es ist ein hoher Materialtransportraum im Innenraum notwendig. Sie verderben die Materialgüte (Zerstoßen, Zerbrechen). Die fest angeordneten Mittel verringern wegen ihres Einbaus die Raumausnutzung des Speicherraumes wesentlich. Sie ersetzen die selbstfahrenden Innenraumverlademaschinen nicht. Zur Auslagerung können sie nur dann verwendet werden, wenn die Schüttgüter bei hohen Transportkosten aus dem Gebäude mit einem Förderfahrzeug zur Aufnahmeschütte der schrägen Fördervorrichtung gefördert werden. Sie benötigen sehr kostspielige Einzelmaschinen und die Ausnutzung des Speicherraumes ist ungünstig.

In der US-A-3 847 270 wird eine der erfindungsgemäßen mobilen Becherfördervorrichtung ähnliche technologische Lösung erläutert. Hier wurde eine elevatorartige Vorrichtung angegeben, von der Schüttgüter aus Schiffsräumen ausgetragen werden und die eine an einem bewegbaren Auslegerarm angeordnete Becherreihe sowie einen daran angeschlossenen Bandförderer enthält. Die Vorrichtung ist mobil und in Schiffsräumen sehr gut handhabbar, aber die Lösung mit Auslegerarm ist in den Innenräumen von Speichern nicht verwendbar.

Eine andere Entwicklungstendenz ist in der DE-C-2 231 857 erläutert, die eine an einem Bandförderer angeschlossene Becherfördereinrichtung betrifft, die von einem entlang einer Schienenbahn bewegbaren Tragrahmen getragen wird und an Förderbänder angeschlossen ist. Die Becherfördereinrichtung kann entlang des Tragrahmens verschoben werden; so z.B. kann das Volumen von Schiffsräumen mittels der Becherfördereinrichtung, insbesondere im Hinblick auf eine gleichmäßige Einlagerung der Schüttgüter ausgenutzt werden.

Beide bekannten technischen Lösungen ermöglichen einen im wesentlichen senkrechten und waagerechten Transportweg meistens bei der Beladung von Schiffen unter Anwendung eines ziemlich robusten und auf Schienen fahrenden Uferwerkes.

Zur Zeit ist jedoch kein einheitliches technologisches Materialtransportsystem bekannt, das in beweglicher Ausführungsform, entlang eines beliebigen Speichergebäudes optimal für unterschiedliche Materialtransportarten anwendbar ist.

Die Erfindung löst die Aufgabe eine gattungsgemäße Förderanlage zu schaffen, welche gleichermaßen das Ein- und Auslagern von Schüttgut in bzw. aus beliebigen Speichergebäuden ermöglicht, wobei größtmögliche Mobilität der Förderanlage gewährleistet ist.

Diese Aufgabe wird erfindungsgemäß durch die Merkmale im kennzeichnenden Teil des Anspruchs 1 gelöst.

Dabei kann die erfindungsgemäße Förderanlage im Vergleich mit dem Stand der Technik vielseitiger verwendet werden, ist selbstfahrend und nicht an Schienen gebunden und leicht ausgeführt und voneinander getrennte Lagerräume können mit einer einzigen Becherfördervorrichtung mit Schüttgut be- oder entladen werden.

Durch die Bewegbarkeit wird das Ein- und Auslagern in mehreren voneinander unabhängigen Speichern in Abhängigkeit von dem Kapazitätsanspruch und der Zeit für den Materialtransport gewährleistet; so können durch Anwendung eines einzigen Gerätes die Elemente des Materialtransportes in mehreren Gebäuden eingespart werden.

Die mobile Becherfördervorrichtung kann in Abhängigkeit von der Wahl der Materialgüte, der Höhe und der Kapazität zum gesamten Transport von im beliebigen Speichergebäude gespeicherten verschiedenen Schüttgütern verwendet werden.

Weiterhin ist es vorteilhaft, daß die bereits eingebauten und funktionierenden Materialtransportsysteme mit der Anwendung einer oberen Förderbahn und anderen Geräten unter lokaler Adaptierung mit geringen Kosten umgestaltet werden können.

Mit dem vorgeschlagenen neuen Materialtransportsystem können über die oben genannten Vorteile hinaus die Raumausnutzung verbessert werden und der Aufwand bei dem Betrieb des Speichers sowie die Material- und Luftverunreinigung verringert werden.

Gemäß einer bevorzugten Weiterbildung der Erfindung sind im Falle mehrerer durch Leitschienen miteinander verbundener Speichergebäude unter Ausbildung von Leitschienenkreuzungspunkten an diesen Wendeplatten eingebaut.

Gemäß einer weiteren bevorzugten Ausführungsform der Erfindung ist der zu dem oberen Bandförderer führende Auslaß ein um 90° schwenkbares Element mit einem Fallrchr.

Die Erfindung wird anhand der Zeichnung näher erläutert. In der Zeichnung zeigen:

Fig. 1 eine in einem Lagerraum angeordnete, die Auslagerung ausführende Einrichtung,

Fig. 2 einen Querschnitt des Leitkanals in gegenüber Fig. 1 vergrößerten Maßstab,

Fig. 3 das Durchführungsschema einer Einlagerungstechnologie,

Fig. 4 die Draufsicht der Anordnung nach Fig. 3 und

Fig. 5 die Bewegungsmöglichkeiten einer mehrere Lagergebäude bedienenden mobilen Becherfördervorrichtung.

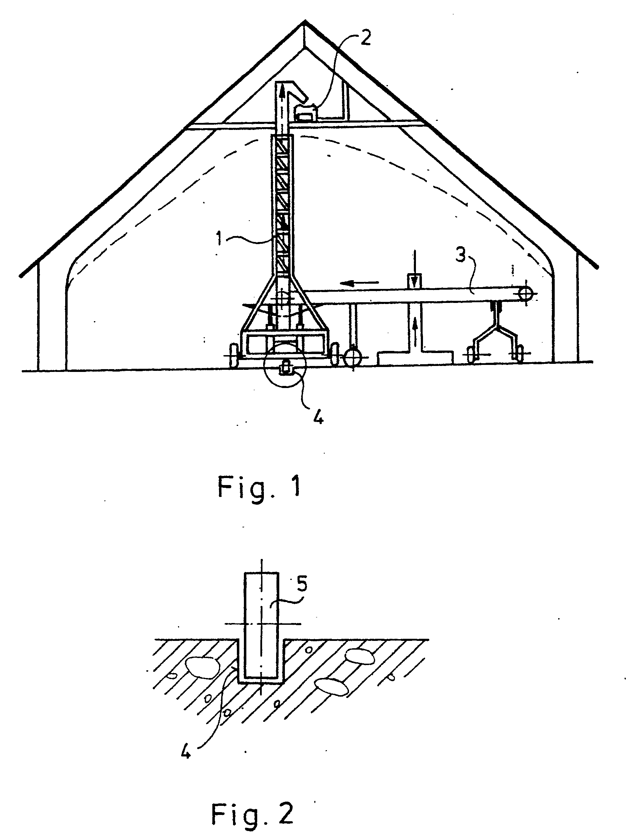

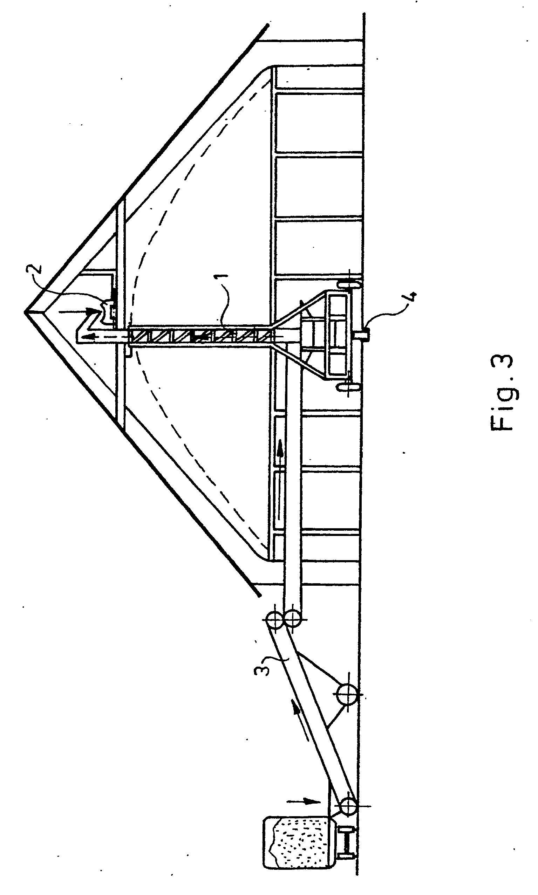

Aus den Figuren 1 und 3 ist es ersichtlich, daß einen wesentlichen Teil der mobilen Becherfördereinrichtung 1 ein als Tragelement ausgestaltetes Laufwerk mit Gummirädern darstellt, das eine fahrgestellartige, zweiachsige, in Abhängigkeit von der Höhe der mobilen Becherfördervorrichtung 1 auf einer Zwangsbahn oder frei fahrbaren Einheit in Stahlkonstruktion ist.

Auf dem Fahrgestellsystem ist über eine lösbare Verbindung die lasttragende Stahlfachwerkkonstruktion aufgebaut, die die Führung der Becherfördervorrichtung 1 in senkrechter Richtung über Rollen, sowie die statische Stabilität der Maschine gewährleistet. Im Fahrgestell befindet sich das Leitrad 5, das die geradlinige Bewegung gewährleistet und selbsteinstellend ist. Die Bewegbarkeit des Laufwerkes mit Gummirädern wird durch am Fahrgestell angeordnete, mit einem Antrieb versehene Elektromotoren gewährleistet.

Innerhalb der Ebene der Fachwerkkonstruktion befindet sich die Maschine für die Energieversorgung und Energieumwandlung. Auf der Fahrgestellkonstruktion sind vier mechanisch betätigte entlastende Sohlen befestigt, die gleichzeitig die Stabilität bei dem Betrieb gewährleisten.

Die Becherfördervorrichtung 1 selbst ist eine mit aus Stahlplatten gebogenen Profilelementen ausgerüstete selbsttragende Konstruktion mit zentrifugaler Entleerung und oberem elektrischen Antrieb. Die Ausführung ihrer Zugelemente hängt von dem zu fördernden Material und der Kapazität ab (Gummilasche, Ketten usw.).

Ihr Aufnahmetrichter ist elastisch mit dem Eingabepunkt verbunden und ihre Antriebskonstruktion ist ein an dem Kopfteil angeordneter, mit Antrieb versehener Asynchronmotor mit elastischer Wellenkupplung. An den vier senkrechten Kanten der Becherfördervorrichtung 1 ist eine Schleifenbahn befestigt, die die Führung der Bewegung in senkrechter Richtung und die Stabilität der Konstruktion bei der Bewegung in der Stahlfachwerkkonstruktion gewährleistet. Die Becherfördervorrichtung 1 ist in einen geschweißten Stahlkontainer eingesetzt, wobei an der oberen Tragkonstruktion sowie an an den Querträgern der Fahrgestellkonstruktion ausgebildeten Gelenkpunkten hydraulische Arbeitszylinder angeschlossen sind.

Die vertikale Verstellung wird durch zwei Arbeitszylinder der Becherfördervorrichtung gewährleistet. Im Fußpunkt der Arbeitszylinder sind Ventilsysteme zum Verhindern des selbsttätigen Absinkens und zur Höhenbegrenzung eingebaut, wodurch die gesteuerte Bewegung der Becherfördervorrichtung 1 gewährleistet wird. In der Einmündung des zentrifugalen Abscheiders der Becherfördervorrichtung ist ein Fallrohr mit über den oberen Bandförderer 1 reichender seitlicher Ausgabetülle eingebaut, das über Gelenkpunkte mechanisch um 90° verschwenkbar aus einem Blechgehäuse ausgeführt ist und dessen Schwenkbarkeit die vertikale Verstellbarkeit der Becherfördervorrichtung ermöglicht; dadurch wird die reversible Bewegbarkeit der mobilen Becherfördervorrichtung 1 in waagerechter Richtung ermöglicht.

Die elektrische Energieversorgung der mobilen Becherfördervorrichtung 1 ist durch das in die Vorrichtung am oberen Bandbahn-Bedienungssteg integrierte, in mehreren Punkten mit Steckern versehene elektrische Kabelsystem gewährleistet. Die elektrische Energie wird in den an der Ebene der Stahlfachwerkkonstruktion angeordneten zentralen Bedienungskasten geleitet. Der Bedienungskasten enthält alle elektrische Sicherungs-, Schutz-, Regel-, Schalt- und Bedienungselemente, die die Beförderbarkeit und Mobilität gewährleisten.

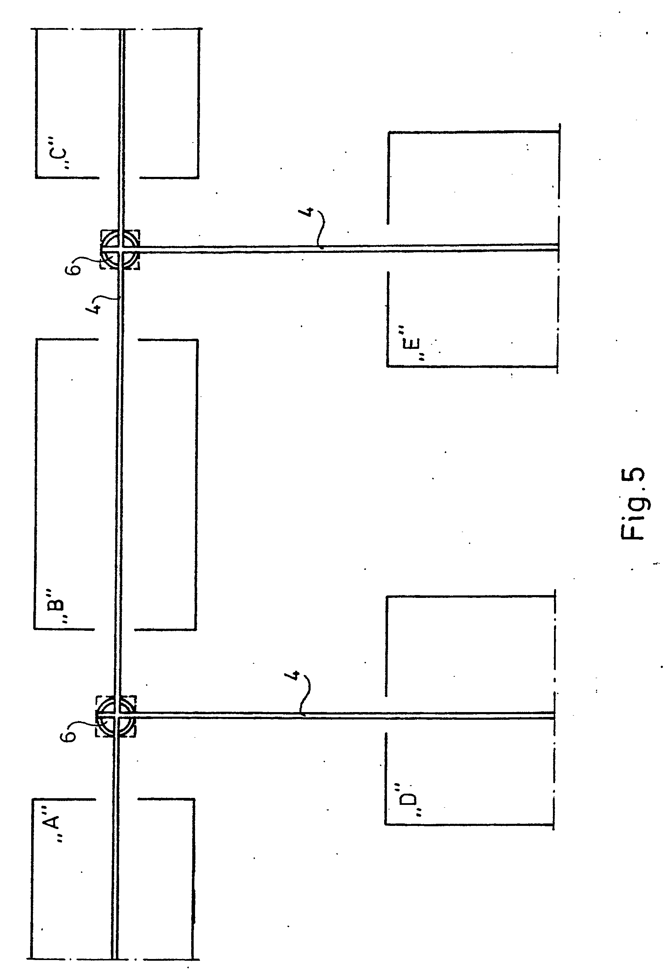

Um die mobile Becherfördervorrichtung 1 bei dem Selbstverfahren in die richtige Richtung bewegen zu können, ist am Bodenniveau der Anordnung nach Fig. 2 ein aus Fig. 5 in Draufsicht ersichtlicher Leitkanal 4 ausgebildet, in den ein Leitrad 5 eingreift. Dadurch wird die Bewegung in die richtige Richtung gelenkt.

Aufgrund der Fig. 5 ist das auch einzusehen, daß dann, wenn eine erwähnte mobile Becherfördervorrichtung 1 zur Bedienung von mehreren Speichergebäuden (Lager A, B, C, D, E) eingesetzt wird, an entsprechenden Kreuzungsstellen der Leitkanäle 4 an sich bekannte Wendescheiben 6 angeordnet werden.

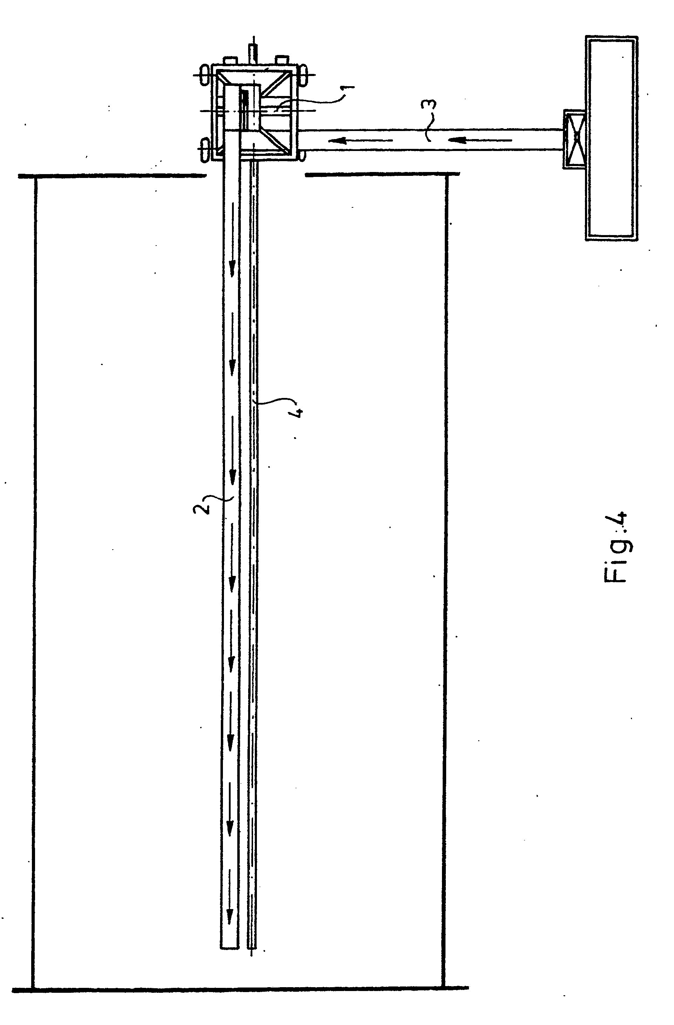

Die Figuren 1, 3 und 4 zeigen den mit der mobilen Becherfördervorrichtung 1 verbundenen oberen Bandförderer 2 und den unteren Bandförderer 3.

Die Förderanlage wird bei dem Betrieb anhand der Ein- und Auslagerungsvorgänge näher erläutert. Die Einlagerung ist in Figur 3 dargestellt. Aus dem Waggon gelangt das Schüttgut auf das mit dem Einfülltrichter versehene schräge Förderband und durch das schräge Förderband wird das Schüttgut auf den horizontalen unteren Bahnförderer 3 hinaufgefördert, der das Schüttgut in den Aufnahmetrichter der mobilen Becherfördervorrichtung 1 fallen läßt, die am äußeren Ende der Speicheranlage aufgestellt ist.

Das Schüttgut wird von der mobilen Becherfördervorrichtung 1 auf den aus dem Gebäude hinausragenden oberen Bandförderer 2 hochgefördert, der mit Hilfe seiner Abwurfvorrichtung den Speicher fortlaufend auffüllt.

Bei der Auslagerung kann entsprechend Fig. 1 die mobile Becherfördervorrichtung 1 an der der Auslagerung entsprechenden Stelle und in dem entsprechenden Höhenniveau eingestellt werden. Das Schüttgut wird von der Aufnahmemaschine fortlaufend auf den mobilen Bandförderer 3 gefördert, der das Schüttgut in den Einfülltrichter der mobilen Becherfördervorrichtung 1 fördert, und von der mobilen Becherfördervorrichung 1 auf den oberen Bandförderer 2 aufgefördert, der das Schüttgut durch das Fallrohr je nach Bedarf weiterfördert.

Wenn in dem Wirkungskreis der Aufnahmemaschine kein Schüttgut mehr vorliegt, erfolgt eine Umstellung, deren Vorgang aus den folgenden Schritten besteht:

Vom Bediener der mobilen Becherfördervorrichtung 1 wird das Maschinensystem im Leergang betrieben und abgestellt. In der oberen Bedienungsbahn wird das Fallrohr der mobilen Becherfördervorrichtung 1 um 90° verdreht und der Netzstecker wird in die Steckdose des nächsten Aufstellortes hineingesteckt. Gleichzeitig wird der mobile Bandförderer 1 mit der Aufnahmemaschine umgestellt. Das Förderelement der mobilen Becherfördervorrichtung 1 wird über das hydraulische System abgelassen.

Das Förderelement wird über die Hydraulik zur oberen Bahn angehoben, während das Fallrohr über das Band geschwenkt wird und in dieser Stellung gesichert wird. Zuerst wird die Becherfördervorrichtung in Betrieb gesetzt, dann schaltet der Bediener der Aufnahmemaschine den mobilen Bandförderer 3 und die Aufnahmevorrichtung ein, wodurch der Materialtransportvorgang wieder beginnt. Die angeführten Arbeitsvorgänge werden solange wiederholt, wie dies zur Auslagerung notwendig ist.

**Patentansprüche**

1. Förderanlage zum Ein- und Auslagern von Schüttgut in bzw. aus Speichergebäuden, mit einem innerhalb des jeweiligen Speichergebäudes eingebauten oberen Bandförderer (2), der von einer vertikalen Becherfördervorrichtung (1) gespeist wird, wobei
   - die Becherfördervorrichtung (1) mit einem angetriebenen Fahrwerk versehen ist,
   - das Fahrwerk mit einem Leitrad (5) verbunden ist, welches mit einer in Längsrichtung des Speichergebäudes verlaufenden, in dessen Boden ausgebildeten Leitschiene (4) zusammenwirkt, die sich auch über das Speichergebäude hinaus nach draußen erstreckt,
   - der zu dem oberen Bandförderer (2) führende Auslaß der Becherfördervorrichtung (1) in vertikaler Richtung verstellbar ist,
   - und der Becherfördervorrichtung ein weiterer unterer Bandförderer (3) zugeordnet ist, welcher mobil und höhenverstellbar ist.

2. Förderanlage nach Anspruch 1, dadurch gekennzeichnet, daß im Falle mehrerer durch Leitschienen (4) miteinander verbundener Speichergebäude unter Ausbildung von Leitschienenkreuzungspunkten an diesen Wendeplatten (6) eingebaut sind.

3. Förderanlage nach Anspruch 1 oder 2, dadurch gekennzeichnet, daß der zu dem oberen Bandförderer (2) führende Auslaß der Becherfördervorrichtung (1) ein um 90° schwenkbares Element mit einem Fallrohr ist.

**Claims**

1. Conveyer arrangement for storage and removal from storage of bulk material into or from storage buildings, with an upper belt conveyer (2) installed within the respective storage building and supplied by a vertical bucket conveyer device (1), with
   - the bucket conveyer device (1) being provided with a driven carriage gear,
   - the carriage gear being connected with a guide wheel (5) which acts together with a guide rail designed in longitudinal direction on the floor of the storage building and extending beyond the storage building out into the open air,
   - the outlet of bucket conveyor device (1) which leads to the upper belt conveyor (2) being adjustable in vertical direction,
   - and a further lower belt conveyor (3) which is mobile and adjustable up and down being assigned to the bucket conveyor device.

2. Conveyor arrangement according to claim 1, characterized in that in case of several storage buildings connected by guide rails, guide rail crossing points are formed and turnplates are installed at the latter.

3. Conveyor arrangement according to claim 1 or 2, characterized in that the outlet of the bucket conveyor device (1) leading to the upper belt conveyor (2) is an element rotatable by 90° and provided with a fall tube.

**Revendications**

1. Installation d'acheminement pour le stockage et le déstockage de matériaux en vrac dans ou bien des locaux de dépôt avec un transporteur à bande supérieur (2) installé à l'intérieur du local de dépôt respectif et alimenté par un dispositif vertical avec transporteur à godets (1) caractérisée en ce que
   - le dispositif avec transporteur à godets (1) soit équipé d'un train d'atterrissage propulsé,
   - le train d'atterrissage soit relié à une couronne directrice (5) concourant à une glissière de guidage (4) se trouvant au sens longitudinal du local de dépôt et qui est formé dans son fond et s'étende aussi sur le local de dépôt,

- l'échappement du dispositif avec transporteur à godets (1) menant au transporteur à bande supérieur (2) soit ajustable au sens vertical,
- et un autre transporteur à bande inférieur (3) soit mobile et ajustable dans sa hauteur et adjoint au dispositif avec transporteur à godets.

2. Installation selon la revendication 1, caractérisée en ce que des plaques-modèles réversibles (6), au cas où plusieurs locaux de dépôt seraient reliés les uns aux autres par des glissières de guidage (4) sous formation des points d'intersection des contre-rails, soient installées aux derniers cités.

3. Installation selon les revendications 1 ou 2, caractérisée en ce que l'échappement du dispositif avec transporteur à godets (1) menant au transporteur à bande supérieur (2) soit un élément orientable de 90° contenant un tube de descente.

Fig. 1

Fig. 2

7

Fig. 3

EP 0 230 883 B1

Fig.4

Fig.5

EP 0 230 883 B1